# EUROPEAN PATENT APPLICATION

(11) **EP 4 678 375 A1**
(43) Date of publication of application: **14.01.2026**
(21) Application number: 23926405.4
(22) Date of filing: 02.11.2023
(51) Int. Cl.: B29C 48/31

(54) **EXTRUSION MOLDING DEVICE**

(30) Priority: 03.03.2023 JP 2023032370
(71) Applicant: The Japan Steel Works, Ltd., Tokyo 141-0032 (JP)
(72) Inventor: YAMASHITA, Shohei, Tokyo 141-0032 (JP); YOKOMIZO, Kazuya, Tokyo 141-0032 (JP)
(74) Representative: Simmons & Simmons LLP (Munich)
(86) International application number: PCT/JP2023/039582
(87) International publication number: WO 2024/185197

(57) **Abstract**

Provided is an extrusion molding device that enables smooth operation of the output shaft of an actuator. The device comprises: an extrusion molding die (20A), a lip spacing adjustment mechanism (31c) that adjusts a lip spacing (S) between a movable lip (21c) and a mating lip (22c) of the extrusion molding die; and a retainer (200) fixed to the extrusion molding die and holding the lip spacing adjustment mechanism, wherein the lip spacing adjustment mechanism includes a rod member (32) that is inserted into a through hole (H210) formed in the retainer and has a tip portion (32a) fixed to the movable lip, and an actuator (311) that adjusts the lip spacing between the movable lip and the mating lip by moving the rod member back and forth in its axial direction, the lip spacing adjustment mechanism further including guide portions (400a, 400b) capable of restricting radial movement of the rod member in the through hole while allowing axial movement of the rod member in the through hole.

## Description

### Technical Field

The present invention relates to an extrusion molding apparatus.

### Background Art

There is known an extrusion molding die (T die) that extrudes a film-shaped molten resin from a space (a slit, a gap; hereinafter, referred to as a lip gap) between lips formed at a tip end (see Patent Literature 1, for example).

Patent Literature 1 discloses a plurality of heats that are disposed in a width direction of an extrusion molding die in order to control the thickness of a film-shaped molten resin extruded from a lip gap to be uniform throughout an entire region in a width direction thereof. By manually rotating a lip adjusting screw, heat bolts move in an axial direction thereof to push or pull one lip (a movable lip, a flexible lip), and locally adjust the lip gap. Thereby, the thickness of the film-shaped molten resin that is extruded from the lip gap thereafter is controlled to be uniform.

On the other hand, the present inventors have studied holding a plurality of lip gap adjusting mechanisms (including a rod member, and an actuator that advances and retracts the rod member in the axial direction) disposed in the width direction of the extrusion molding die by a retainer (holding member) fixed to the extrusion molding die and adjusting the lip gap at a spot where each of the lip gap adjusting mechanisms is disposed. The rod member is inserted into a through-hole formed in the retainer and the tip end portion thereof is fixed to a movable lip of the extrusion molding die.

### Citation List

### Patent Literature

Patent Literature 1: Japanese Unexamined Patent Application Publication No. 2013-52574

### Summary of Invention

### Technical Problem

The present inventors have found, as a result of the study, that there is a problem in the aforementioned configuration that it becomes difficult for an output axis of an actuator to perform smooth operation (e.g., rotation) due to occurrence of a lip bending load when a movable lip to which a rod member (tip end portion) is fixed (rigidly connected) is displaced (pushed or pulled) with respect to a fixed lip of an extrusion molding die and a lip gap is adjusted.

The other problems and new features will become apparent from the description of the present specification and the accompanying drawings.

### Solution to Problem

An extrusion molding apparatus according to one embodiment includes: an extrusion molding die; a lip gap adjusting mechanism configured to adjust a lip gap between a movable lip and a mating lip of the extrusion molding die; and a retainer configured to be fixed to the extrusion molding die and hold the lip gap adjusting mechanism, in which the lip gap adjusting mechanism includes a rod member which is inserted into a through-hole formed in the retainer and whose tip end portion is fixed to the movable lip, and an actuator configured to adjust the lip gap between the movable lip and the mating lip by advancing or retracting the rod member in an axial direction, and the extrusion molding apparatus further includes a guide portion capable of allowing the rod member to move in the axial direction in the through-hole while restricting a movement of the rod member in a radial direction in the through-hole.

### Advantageous Effects of Invention

According to the embodiment, it is possible to provide an extrusion molding apparatus capable of enabling an output axis of an actuator to perform smooth operation (e.g., rotation) even when a movable lip to which a rod member (tip end portion) is fixed (rigidly connected) is displaced (pushed or pulled) with respect to a fixed lip of an extrusion molding die.

### Brief Description of Drawings

Fig. 1 is a schematic view showing an entire configuration of an extrusion molding apparatus 1 according to a first embodiment;
Fig. 2 is a perspective view of a T die 20 to which a lip gap adjusting device 30 is attached;
Fig. 3 is an arrow view seen from an arrow A1 direction in Fig. 2;
Fig. 4 is a cross-sectional view along IV-IV in Fig. 3;
Fig. 5 is a flowchart of an operation example (before start of molding) of the lip gap adjusting device 30;
Fig. 6 is a flowchart of the operation example (after start of molding) of the lip gap adjusting device 30;
Fig. 7 is a graph showing a relationship between a time period and a displacement amount of a movable lip 21c when a lip gap S is adjusted by the lip gap adjusting device 30;
Fig. 8A is a lip gap adjusting device 30A of a comparative example;
Fig. 8B is a graph showing a time period and a displacement amount of the movable lip 21c when the lip gap S is adjusted by the lip gap adjusting device 30A (heat bolt 33) of the comparative example;
Fig. 9 is a cross-sectional view of the T die 20 to which a lip gap adjusting device 30 (modified example 1) is attached;
Fig. 10 is a cross-sectional view of the T die 20 to which a lip gap adjusting device 30 (modified example 2) is attached;
Fig. 11 is a perspective view of the T die 20 to which a lip gap adjusting device 30A (modified example 3) is attached;
Fig. 12 is an arrow view seen from an arrow A2 direction in Fig. 11;
Fig. 13 is a cross-sectional view along XIII-XIII in Fig. 12;
Fig. 14 is a cross-sectional view of a T die 20 (modified example 4) including a die block 21A including a movable lip 21Ac and a die block 21B including a movable lip 21Bc;
Fig. 15 is a perspective view of a T die 20A to which a lip gap adjusting mechanism 31C is attached;
Fig. 16 is a central cross-sectional view of the T die 20A;
Fig. 17 is a perspective view of the lip gap adjusting mechanism 31C extracted from Fig. 15;
Fig. 18 is a perspective view of a retainer 200;
Fig. 19 is a diagram showing transfer of heat from the T die 20A (heat source);
Fig. 20 shows an example of an extrusion molding apparatus 1A to which heat dissipation facilitation means 700 is applied;
Fig. 21 is a diagram for describing effects of providing bushings 400a and 400b;
Fig. 22 is a partially enlarged view (simplified view) of an extrusion molding apparatus according to the comparative example;
Fig. 23 is a modified example of the bushings 400a and 400b;
Fig. 24 shows another modified example of the bushings 400a and 400b;
Fig. 25 shows another example of the heat dissipation facilitation means 700;
Fig. 26 shows another example of the heat dissipation facilitation means 700;
Fig. 27A shows an example of fitting when one bushing 400b is used; and
Fig. 27B shows an example of fitting when two bushings 400a and 400b are used.

### Description of Embodiment

<Reference Examples>

Hereinafter, reference examples will be described in detail with reference to the drawings. However, the present invention is not limited to the following reference examples. Further, in order to clarify the explanation, the following description and drawings are properly simplified.

### (Reference Example 1)

### <Entire Configuration of Extrusion Molding Apparatus>

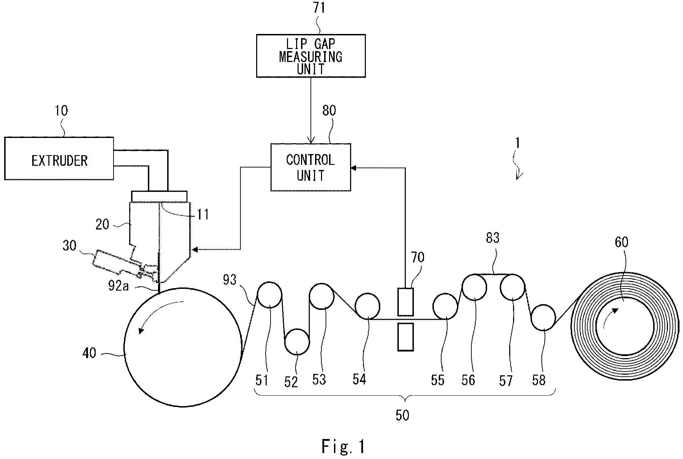

First, an entire configuration of an extrusion molding apparatus 1 according to a reference example 1 will be described with reference to Fig. 1. Fig. 1 is a schematic view showing the entire configuration of the extrusion molding apparatus 1 according to the reference example 1.

The extrusion molding apparatus 1 is an apparatus that extrudes a molten resin that is extruded from an extruder 10 (molten resin outlet 11) into a film form from a slit outlet formed at a tip end of a T die 20 (extrusion molding die), that is, a space (a slit, a gap; hereinafter, referred to as a lip gap) between lips. In the present specification, the film includes a sheet.

As shown in Fig. 1, the extrusion molding apparatus 1 includes the extruder 10, the T die 20, a lip gap adjusting device 30, a cooling roll 40, a conveyor roll group 50, a winder 60, a thickness sensor 70, a lip gap measuring unit 71, and a control unit 80. In other words, the extrusion molding apparatus 1 is an unstretched film manufacturing apparatus. Note that the extrusion molding apparatus 1 may be biaxially stretched film manufacturing apparatus in which a longitudinally stretching device that stretches a film in a longitudinal direction (MD (Machine Direction) stretch), and a transversely stretching device that stretches the film in a transverse direction (TD (Transverse Direction) stretch) are disposed in series in this order between the cooling roll 40 and the winder 60, may be a simultaneously biaxially stretched film manufacturing apparatus in which a stretching device that stretches a film in the longitudinal direction and the transverse direction is disposed between the cooling roll 40 and the winder 60, or may be a film manufacturing apparatus of another configuration.

The extruder 10 is a device that extrudes a resin that is heated and melted (hereinafter, referred to as a molten resin) from the molten resin outlet 11. The extruder 10 may be a screw type extruder, or may be a plunger type extruder.

The cooling roll 40 carries out a film 93 resulting from solidification of a film-shaped molten resin 92a while cooling the film-shaped molten resin 92a extruded from the T die 20. The film 93 that is carried out from the cooling roll 40 is conveyed via the conveyor roll group 50, and is wound up by the winder 60. In an example of Fig. 1, the conveyor roll group 50 includes eight conveyor rolls 51 to 58. The number and disposition of the conveyor rolls are properly determined.

The thickness sensor 70 is an online thickness sensor (thickness gauge), and measures the thickness of the film formed from the molten resin extruded from the T die 20 in real time at a plurality of positions (at least a plurality of positions corresponding to a plurality of lip gap adjusting mechanisms 31 disposed as described later) along a width direction of the T die 20 (direction orthogonal to a paper surface in Fig. 1). The thickness sensor 70 may be a non-contact type (for example, a laser type, a β-ray type, an X-ray type) thickness sensor, or may be a direct type (for example, a linear gauge type) thickness sensor.

The lip gap measuring unit 71 measures a lip gap at a plurality of positions along the width direction of the T die 20 (a plurality of positions corresponding to the plurality of lip gap adjusting mechanisms 31 that are disposed as described later). A lip gap at each of the plurality of positions may be detected by applying predetermined image processing to an image including the lip gap captured by a camera, or may be detected by a laser type gap sensor. Note that the lip gap at each of the plurality of positions may be manually measured by using a gap gauge. Note that, in the case of manual measurement, it is necessary to input measurement data to the control unit 80 manually.

The control unit 80 controls an actuator so that the thickness of a film becomes uniform based on the thickness (thickness data) of the film measured at the plurality of positions by the thickness sensor 70. The control unit 80 includes a processor though not illustrated. The processor is, for example, a CPU (Central Processing Unit). An operation of the control unit 80 will be described later.

### <Configuration of T Die>

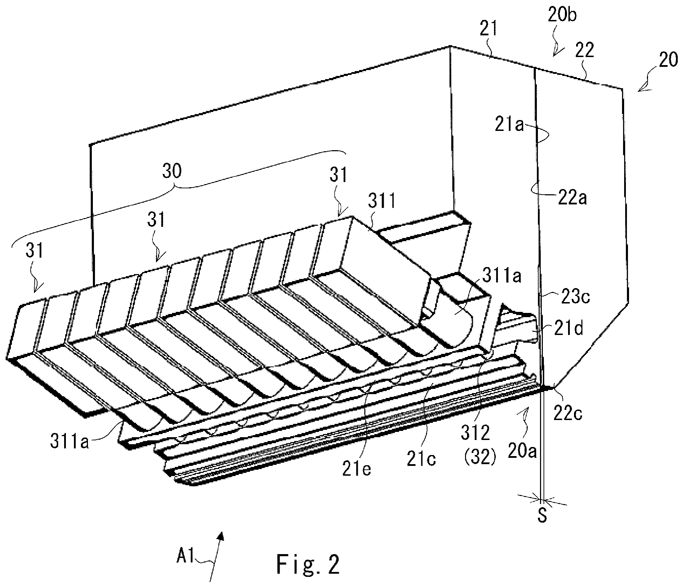

Next, a configuration of the T die 20 will be described with reference to Fig. 2 to Fig. 4.

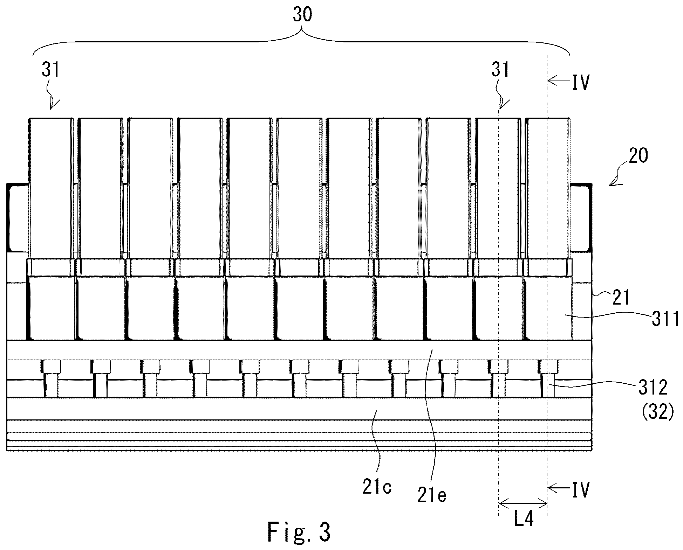

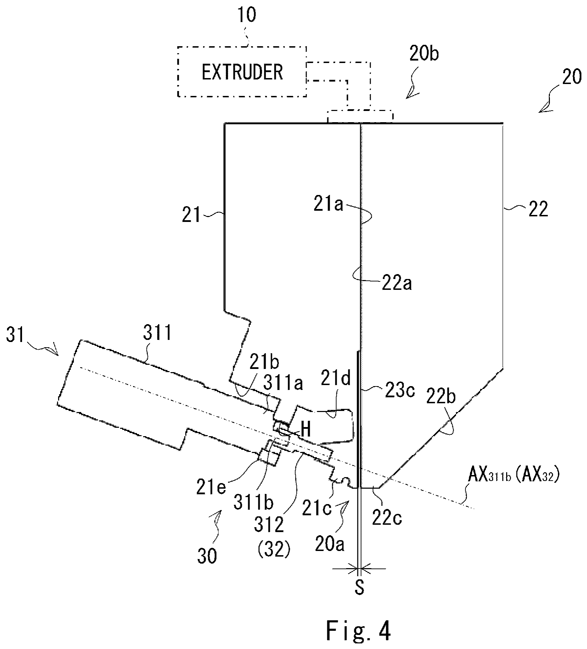

Fig. 2 is a perspective view of the T die 20 to which the lip gap adjusting device 30 is attached, Fig. 3 is an arrow view seen from an arrow A1 direction in Fig. 2, and Fig. 4 is a cross-sectional view along IV-IV in Fig. 3.

The T die 20 is a block-shaped member that molds the molten resin extruded from the extruder 10 into a film form. The T die 20 is typically made of a metal.

As shown in Fig. 4 and the like, a base end portion 20b side of the T die 20 is attached to the extruder 10 in a state in which a tip end portion 20a and a base end portion 20b thereof are disposed in a vertical direction. Note that though not illustrated, the base end portion 20b side of the T die 20 may be attached to the extruder 10 in a state in which the tip end portion 20a and the base end portion 20b thereof are disposed in a horizontal direction.

The T die 20 includes a pair of die blocks 21 and 22. The die block 21 is one example of a first die block of the present invention, and the die block 22 is an example of a second die block of the present invention. The pair of die blocks 21 and 22 respectively include surfaces 21a and 22a that face each other. Though not illustrated, the T die 20 includes an introduction passage, a manifold, and a slit 23c that are formed between the surfaces 21a and 22a facing each other.

The introduction passage is a passage that allows the base end portion 20b of the T die 20 to which the extruder 10 is connected, and the manifold to communicate with each other. The introduction passage extends from the base end portion 20b of the T die 20 toward the tip end portion 20a on an opposite side thereof. A molten resin that is extruded from the extruder 10 is introduced into the introduction passage.

The manifold is a passage extending in the width direction (direction orthogonal to a paper surface in Fig. 4) of the T die 20. The manifold is formed in a middle between the base end portion 20b and the tip end portion 20a of the T die 20. The molten resin passing through the introduction passage is introduced into the manifold. The molten resin passing through the introduction passage passes through the manifold and thereby is pushed and spread in the width direction of the T die 20. The introduction passage and the manifold configure a T shape. The introduction passage corresponds to a vertical bar configuring the T shape, and the manifold corresponds to a horizontal bar configuring the T shape.

The slit 23c is a gap that allows the tip end portion 20a of the T die 20 and the manifold to communicate with each other. The slit 23c extends in the width direction of the T die 20.

A pair of die blocks 21 and 22 respectively include tip end portions including taper surfaces 21b and 22b that are inclined toward tip ends. The die block 21 includes a movable lip 21c (flexible lip). The movable lip 21c can locally displace with a bottom portion of a recessed portion 21d formed at the tip end portion of the die block 21 as a support point by being pushed or pulled by a lip gap adjusting mechanism 31 described later. A tip end (lower end in Fig. 4) of the tip end portion of the die block 21 is the movable lip 21c.

On the other hand, the die block 22 includes a fixed lip 22c. The fixed lip 22c is one example of a mating lip of the present invention. The fixed lip 22c does not displace even when the movable lip 21c is pushed or pulled by the lip gap adjusting mechanism 31 described later. A tip end (lower end in Fig. 4) of the tip end portion of the die block 22 is the fixed lip 22c. The movable lip 21c, the fixed lip 22c, and the recessed portion 21d extend in the width direction of the T die 20.

In the T die 20 of the above-described configuration, the molten resin extruded from the extruder 10 passes through the introduction passage and the manifold that are provided inside of the T die 20, in this order. At this time, the molten resin is pushed and spread in the width direction of the T die 20 by passing through the manifold. The molten resin that is pushed and spread in the width direction of the T die 20 passes through the slit 23c, and is finally extruded into a film form from a slit outlet formed at a tip end of the T die 20, that is, a lip gap S between the movable lip 21c and the fixed lip 22c. A width of the molten resin 92a (see Fig. 1) extruded into a film form corresponds to the width of the T die 20.

### <Configuration of Lip Gap Adjusting Device>

The reference example 1 is characterized by including a lip gap adjusting device 30 that will be described below.

As shown in Fig. 2, the lip gap adjusting device 30 includes a plurality of lip gap adjusting mechanisms 31 that are disposed in the width direction of the T die 20 and configured to adjust the lip gap S at respective disposition spots. As shown in Fig. 4 and the like, the lip gap adjusting mechanism 31 includes an actuator 311, and a coupling member 312 that couples an output shaft 311b of the actuator 311 and the movable lip 21c to each other.

The actuator 311 includes an actuator body 311a, and the output shaft 311b that is a rotary shaft. The actuator 311 is, for example, a servomotor (a DC servomotor, an AC servomotor), a stepping motor, a coreless motor, or a DD motor.

The coupling member 312 is a rod member (or an adjusting bolt; hereinafter, referred to as a rod member 32) in which a tip end portion is screwed into the movable lip 21c, and a base end portion is coupled (fixed) to the output shaft 311b of the actuator 311. The rod member 32 is typically made of a metal.

As shown in Fig. 4 and the like, the actuator body 311a is fixed (for example, screw-fixing) to a holding portion 21e provided at the die block 21. The output shaft 311b of the actuator 311 is coupled (fixed) to the base end portion of the rod member 32 the tip end portion of which is screwed into the movable lip 21c in a state in which the output shaft 311b of the actuator 311 is inserted into a through-hole H formed in the holding portion 21e. Note that a center axis AX_{311b} (rotation axis) of the output shaft 311b of the actuator 311 and a center axis AX₃₂ (rotation axis) of the rod member 32 coincide (substantially coincide) with each other.

The control unit 80 is electrically connected to the actuator 311. The control unit 80 controls a rotation direction (a forward direction or a reverse direction) and a rotation amount of the output shaft 311b as described later. The actuator 311 follows control of the control unit 80, and rotates the output shaft 311b (and the rod member 32) to change a screwing amount of the rod member 32 into the movable lip 21c. Thereby, the movable lip 21c displaces (is pushed or pulled) with respect to the fixed lip 22c, and the lip gap S is adjusted.

In order to make the thickness of the film-shaped molten resin extruded from the lip gap S uniform throughout an entire region in the width direction of the T die 20, the plurality of lip gap adjusting mechanisms 31 are attached to the T die 20 (die block 21) in the width direction thereof as shown in Fig. 2 and Fig. 3. The respective lip gap adjusting mechanisms 31 are fixed (for example, screw-fixing) to the holding portion 21e provided at the die block 21. Note that in each of Fig. 2 and Fig. 3, an example in which the number of lip gap adjusting mechanisms 31 is 11 is illustrated, but regardless of this, the number of lip gap adjusting mechanisms 31 can be the number (1 or more) corresponding to the width of the T die 20 (die block 21).

### <Operation Example of Lip Gap Adjusting Mechanism>

Next, an operation example of the lip gap adjusting mechanism 31 of the above-described configuration will be described.

According to the lip gap adjusting mechanism 31 of the above-described configuration, it is possible to locally adjust the lip gap S by controlling the rotation direction (the forward direction or the reverse direction) and the rotation amount of the output shaft 311b (and the rod member 32).

For example, the output shaft 311b (and the rod member 32) is rotated (for example, rotated forward) by the actuator 311 to change (decrease) the screwing amount of the rod member 32 into the movable lip 21c. Thereby, the movable lip 21c locally displaces with the bottom portion of the recessed portion 21d as the support point to move close to the fixed lip 22c. Thereby, the lip gap S is locally narrowed. As a result, the thickness of the film-shaped molten resin (film 93) that is thereafter extruded from the lip gap S locally decreases.

Conversely, the output shaft 311b (and the rod member 32) is rotated (for example, reversely rotated) by the actuator 311 to change (increase) the screwing amount of the rod member 32 into the movable lip 21c. Thereby, the movable lip 21c locally displaces with the bottom portion of the recessed portion 21d as the support point and separates from the fixed lip 22c. Thereby, the lip gap S is locally widened. As a result, the thickness of the film-shaped molten resin (film 93) that is thereafter extruded from the lip gap S locally increases.

### <Operation Example of Lip Gap Adjusting Device (Before Start of Molding)>

Next, an operation example of the lip gap adjusting device 30 of the above-described configuration (before start of molding) will be described. As described below, by adjusting the lip gap at each of the plurality of positions uniformly before start of molding, it is possible to quickly adjust the thickness of the film-shaped molten resin (film 93) that is extruded from the lip gap S uniformly after start of molding.

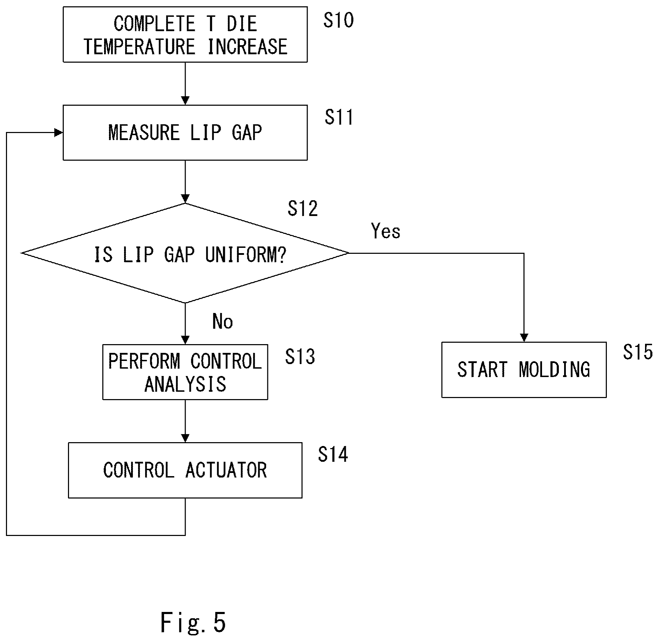

Fig. 5 is a flowchart of the operation example of the lip gap adjusting device 30 (before start of molding).

The following process is realized by the control unit 80 (processor) executing a program that is loaded into a memory (not illustrated) such as a RAM (Random Access Memory) from a storage device (not illustrated) such as a hard disk drive.

When temperature rising of the T die 20 is completed (step S10), the lip gap measuring unit 71 measures the lip gap (lip space) (step S11). Specifically, the lip gap measuring unit 71 measures the lip gap (lip space) at the plurality of positions (plurality of positions corresponding to the plurality of lip gap adjusting mechanisms 31) along the width direction of the T die 20. The measured lip gaps (gap data) are transferred to the control unit 80.

Next, when the lip gaps (plural) measured in step S11 are not uniform (step S12: No), for example, when a lip gap measured in at least one position is outside an allowable range, the control unit 80 performs a control analysis (step S13), and controls the actuator 311 of the lip gap adjusting mechanism 31 corresponding to the position at which the lip gap outside the allowable range is measured (step S14).

Specifically, the control unit 80 locally adjusts the lip gap by controlling the actuator 311 (the rotation direction and the rotation amount of the output shaft 311b) of the lip gap adjusting mechanism 31 corresponding to the position at which the lip gap outside the allowable range is measured so that the lip gaps become uniform (for example, so that the lip gap outside the allowable range is within the allowable range), based on the lip gaps (gap data) measured in step S11.

Next, the lip gap measuring unit 71 measures the lip gaps (lip spaces) again (step S11).

Thereafter, until the lip gaps (plural) measured in step S11 become uniform, the processes in steps S13, S14, and S11 described above are repeatedly executed (step S12: No).

On the other hand, when the lip gaps (plural) measured in step S11 become uniform (step S12: Yes), that is, when all the lip gaps respectively measured at the plurality of positions are within the allowable range, molding is started (step S15).

### <Operation Example of Lip Gap Adjusting Device (After Start of Molding)>

Next, an operation example of the lip gap adjusting device 30 of the above-described configuration (after start of molding) will be described.

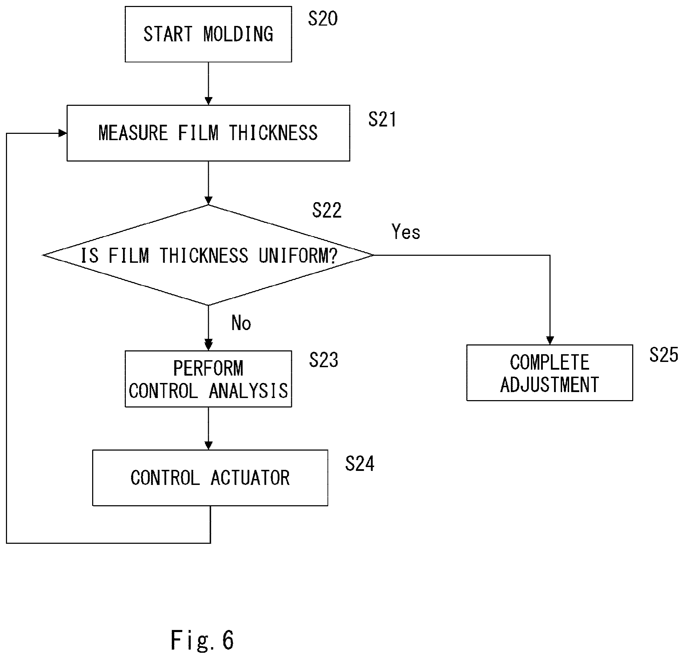

Fig. 6 is a flowchart of the operation example of the lip gap adjusting device 30 (after start of molding).

The following process is realized by the control unit 80 (processor) executing a program loaded into a memory (not illustrated) such as a RAM (Random Access Memory) from a storage device (not illustrated) such as a hard disk drive.

After start of molding (step S20), that is, while the film-shaped molten resin is extruded from the lip gap S, the thickness sensor 70 measures the thickness of the film formed from the molten resin extruded from the T die 20 (lip gap S) (step S21). Specifically, the thickness sensor 70 measures the thickness of the film in real time at a plurality of positions (plurality of positions corresponding to the plurality of lip gap adjusting mechanisms 31) along the width direction of the T die 20. The thickness of the film that is measured (thickness data) is transferred to the control unit 80.

Next, when the thicknesses (plural) of the film measured in step S21 is not uniform (step S22: No), for example, when the thickness of the film measured in at least one position is outside an allowable range, the control unit 80 performs a control analysis (step S23), and controls the actuator 311 of the lip gap adjusting mechanism 31 corresponding to the position at which the thickness of the film outside the allowable range is measured (step S24).

Specifically, the control unit 80 locally adjusts the lip gap by controlling the actuator 311 (the rotation direction and the rotation amount of the output shaft 311b) of the lip gap adjusting mechanism 31 corresponding to the position at which the thickness of the film outside the allowable range is measured so that the thickness of the film becomes uniform (for example, so that the thickness of the film outside the allowable range is within the allowable range), based on the thicknesses of the film measured in step S21 (thickness data).

Next, the thickness sensor 70 measures the thickness of the film formed from the molten resin extruded from the T die 20 (lip gap) again (step S21).

Thereafter, until the thicknesses (plural) of the film measured in step S21 become uniform, the processes of steps S23, S24 and S21 described above are repeatedly executed (step S22: No).

On the other hand, when the thicknesses (plural) of the film measured in step S21 become uniform (step S22: Yes), that is, all the thicknesses of the film measured at the respective plurality of positions are within the allowable range, adjustment is completed (step S25). As above, the film with a uniform thickness can be manufactured.

### <Displacement Amount of Lip>

Next, a relationship between a time period and a displacement amount of the movable lip 21c when the lip gap S is adjusted by the lip gap adjusting device 30 of the above-described configuration will be described.

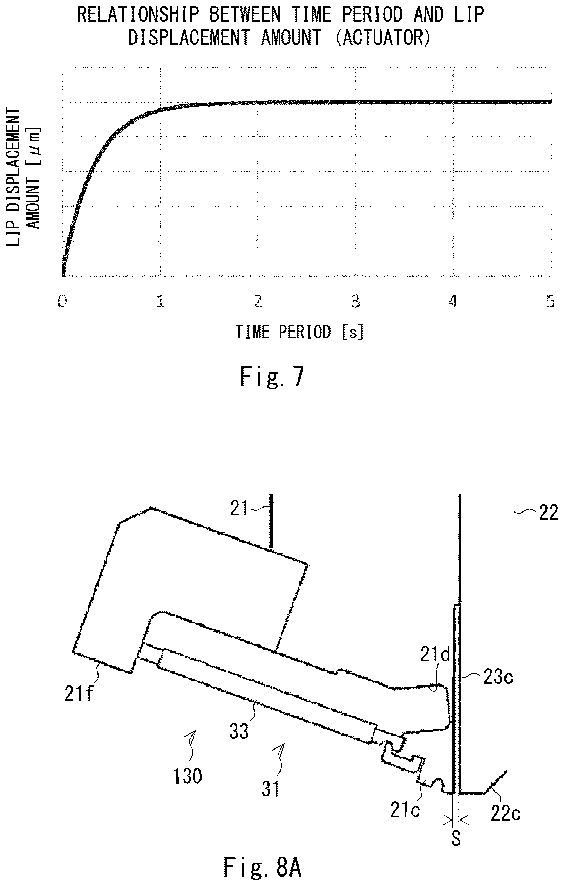

Fig. 7 is a graph showing the relationship between the time period and the displacement amount of the movable lip 21c when the lip gap S is adjusted by the lip gap adjusting device 30.

Referring to Fig. 7, it is found that when the lip gap S is adjusted by the lip gap adjusting device 30, the displacement amount (displacement amount of the movable lip 21c with respect to the fixed lip 22c) of the movable lip 21c is stabilized in less than 2 seconds, that is, the lip gap S can be adjusted in less than 2 seconds.

### <Comparative Example>

Next, a comparative example will be described.

Fig. 8A is a lip gap adjusting device 130 of the comparative example.

As shown in Fig. 8A, in the lip gap adjusting device 130 of the comparative example, a heat bolt 33 in which a tip end portion is coupled (fixed) to a movable lip 21c, and a base end portion is coupled (fixed) to a holding portion 21f provided at a die block 21 is disposed as the lip gap adjusting mechanism 31, in place of the actuator 311 and the rod member 32. The heat bolt 33 thermally expands by increasing a heating temperature of a heater (not illustrated) to increase in a length in an axial direction, and contracts by decreasing the heating temperature of the heater to decrease in the length in the axial direction. In the lip gap adjusting device 130 of the comparative example, the heating temperature of the heater is controlled to extend or contract the heat bolt 33 in the axial direction, and thereby the lip gap is adjusted.

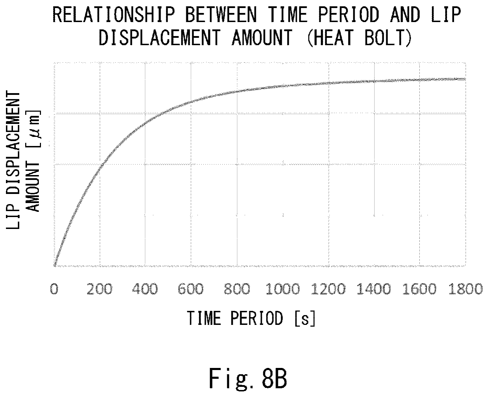

Fig. 8B is a graph showing a relationship between a time period and a displacement amount of the movable lip 21c when the lip gap S is adjusted by the lip gap adjusting device 130 (heat bolt 33) of the comparative example.

Referring to Fig. 8B, it is found that when the lip gap S is adjusted by the lip gap adjusting device 130 (heat bolt 33), it takes about 1600 seconds until the displacement amount of the movable lip 21c (displacement amount of the movable lip 21c with respect to the fixed lip 22c) is stabilized.

As above, it is found that when the lip gap S is adjusted by the lip gap adjusting device 30 (the actuator 311 and the rod member 32), a time period required to displace to a target value is overwhelmingly short (the lip gap S can be adjusted extremely quickly), as compared with the case of adjusting the lip gap S by the lip gap adjusting device 130 (heat bolt 33).

As described above, according to the reference example 1, it is possible to shorten the time period required for adjustment of the lip gap.

This is because the actuator 311 and the rod member 32 are used instead of the heat bolt, as the lip gap adjusting mechanism 31, and the actuator 311 rotates the rod member 32 to change the screwing amount of the rod member 32 into the movable lip 21c, and thereby adjusts the lip gap S.

Further, according to the reference example 1, by attaching the actuators 311 to the coupling members 312 (rod members or adjusting bolts) one by one, all the coupling members 312 (the rod members or the adjusting bolts) can be simultaneously pushed and pulled at a rough adjustment stage (before start of molding), whereas at a fine adjustment stage (after start of molding), the time period required to reach the target displacement amount is overwhelmingly shorter than the heat bolt, so that it is possible to shorten the time period required for thickness control of the film.

Further, according to the reference example 1, there is also an advantage that there is no risk of damage to the coupling member 312 (the rod member or the adjusting bolt) due to excessive tightening because the lip gap is adjusted by only the actuator 311, although when adjustment (rough adjustment) of the lip gap by bolt tightening is manually performed, there is a risk that the heat bolt may be damaged by being bent or the like by excessive tightening.

Further, according to the reference example 1, there is no need for manual adjustment by performing control with the actuator 311, and therefore, there is also an advantage that there is no need to approach the T die 20 which is a hot object, and a roll (cooling roll 40 or the like) which is a rotating body and perform operations during molding (increase in safety).

Next, modified examples will be described.

### (Modified Example 1)

In the reference example 1 described above, the example using the rod member 32 as the coupling member 312 that couples the output shaft 311b of the actuator 311 and the movable lip 21c to each other is described, but the present invention is not limited to this.

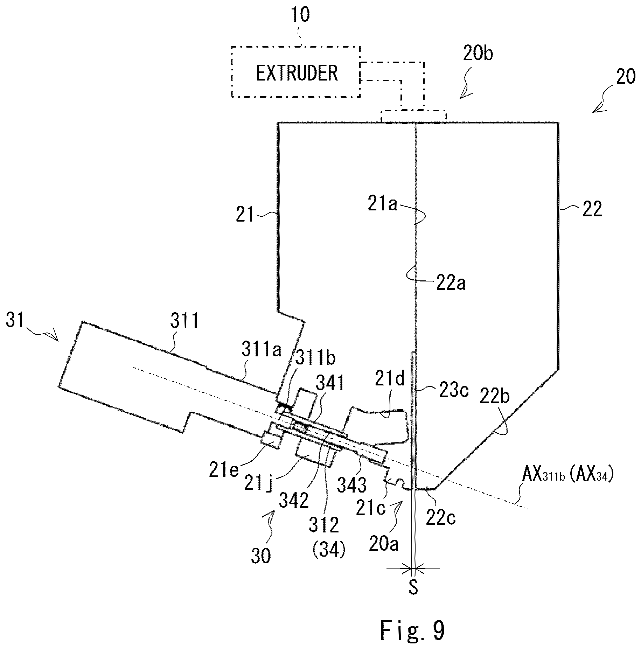

For example, as shown in Fig. 9, as a coupling member 312 that couples an output shaft 311b of an actuator 311 and a movable lip 21c, a differential screw (hereinafter, referred to as a differential screw 34) in which a tip end portion is coupled (fixed) to the movable lip 21c, and a base end portion is coupled (fixed) to the output shaft 311b of the actuator 311 may be used. Fig. 9 is a cross-sectional view of a T die 20 to which a lip gap adjusting device 30 (modified example 1) is attached.

The differential screw 34 is a differential screw in which a pitch of an external screw 341 and a pitch of an internal screw 342 are different (the pitch of the external screw 341 > the pitch of the internal screw 342).

The external screw 341 of the differential screw 34 is screwed into a holding portion 21j provided at a die block 21. A rod 343 is screwed onto the internal screw 342 of the differential screw 34. The tip end portion of the differential screw 34 (rod 343) is coupled (fixed) to the movable lip 21c. Note that a center axis AX_{311b} (rotation axis) of the output shaft 311b of the actuator 311 and a center axis AX₃₄ (rotation axis) of the differential screw 34 coincide (substantially coincide) with each other.

According to modified example 1, it is possible to exhibit similar effects to those of the reference example 1, such as being able to shorten the time period required for adjustment of the lip gap.

This is because the actuator 311 and the differential screw 34 are used as the lip gap adjusting mechanism 31 instead of the heat bolt, and the actuator 311 rotates the differential screw 34, and thereby adjusts the lip gap S.

### (Modified Example 2)

In the reference example 1 described above, the example using the actuator 311 including the actuator body 311a, and the output shaft 311b that is a rotary shaft is described, but the present invention is not limited to this.

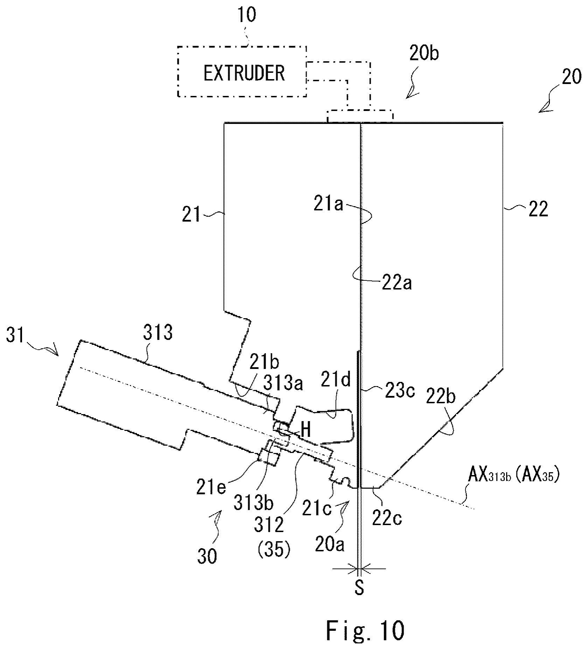

For example, as shown in Fig. 10, instead of the actuator 311, an actuator 313 (linear actuator) including an actuator body 313a, and an output shaft 313b that is extruded or retracted with respect to the actuator body 313a may be used. Fig. 10 is a cross-sectional view of a T die 20 to which a lip gap adjusting device 30 (modified example 2) is attached. In this case, as a coupling member 312 that couples the output shaft 313b of the actuator 313 and a movable lip 21c, a rod member 35 in which one end portion is coupled to the movable lip 21c, and the other end portion is coupled to the output shaft 313b of the actuator 313 is used. Note that a center axis AX_{313b} (rotation axis) of the output shaft 313b of the actuator 313 and a center axis AX₃₅ (rotation axis) of the rod member 35 coincide (substantially coincide) with each other.

According to modified example 2, it is also possible to exhibit similar effects to those of the reference example 1, such as being able to shorten the time period required for adjustment of the lip gap.

This is because the actuator 313 and the rod member 35 are used as the lip gap adjusting mechanism 31 instead of the heat bolt, and the actuator 313 extrudes or retracts the output shaft 313b, and thereby adjusts the lip gap S.

### (Modified Example 3)

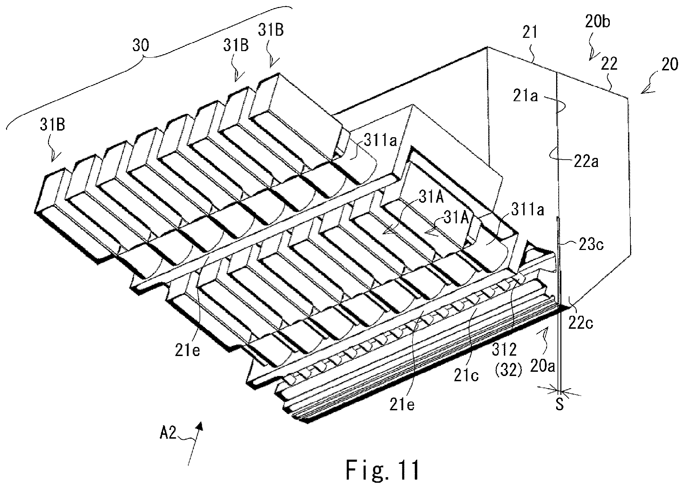

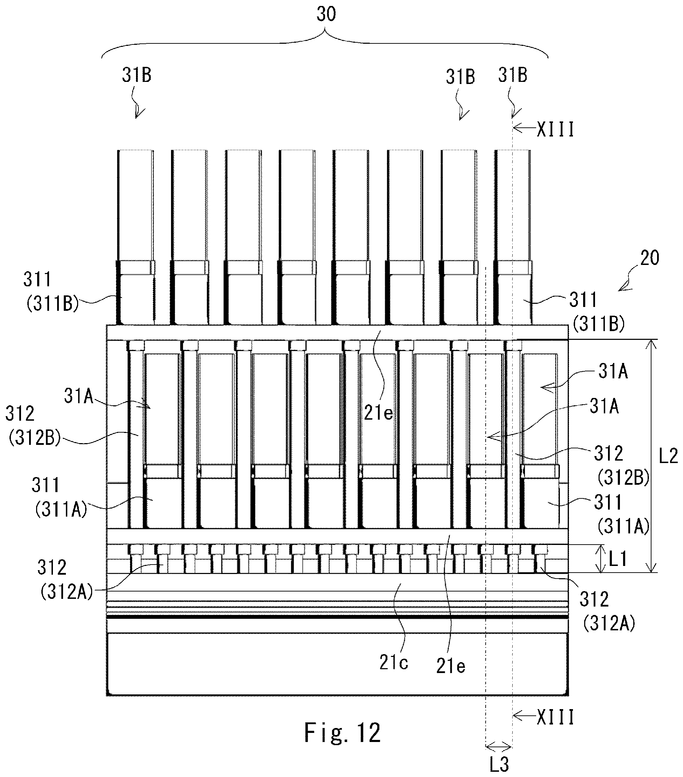

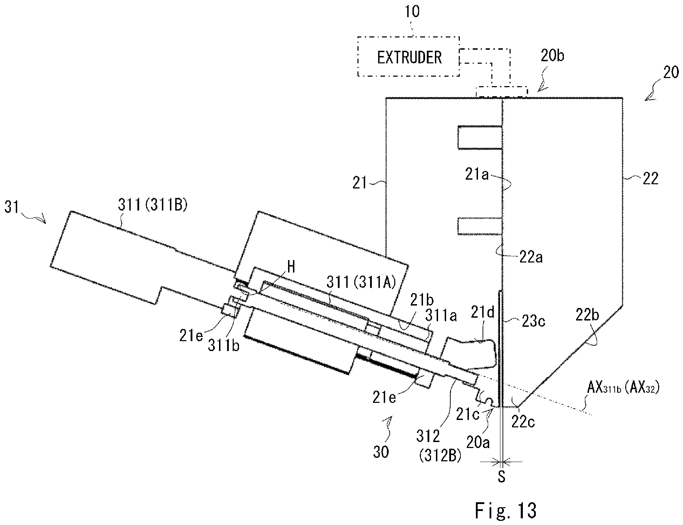

Fig. 11 is a perspective view of a T die 20 to which a lip gap adjusting device 30 (modified example 3) is attached, Fig. 12 is an arrow view seen from an arrow A2 direction in Fig. 11, and Fig. 13 is a cross-sectional view along XIII to XIII in Fig. 12.

As shown in Fig 11 to Fig. 13, a lip gap adjusting device 30A (modified example 3) includes first lip gap adjusting mechanisms 31A and second lip gap adjusting mechanisms 31B. The first lip gap adjusting mechanisms 31A and the second lip gap adjusting mechanisms 31B are alternately disposed in a width direction of the T die 20.

The first lip gap adjusting mechanism 31A includes an actuator 311 (hereinafter, referred to as a first actuator 311A), and a coupling member 312 (hereinafter, referred to as a first coupling member 312A) that couples an output shaft 311b of the first actuator 311A and a movable lip 21c.

The second 1ip gap adjusting mechanism 31B includes an actuator 311 (hereinafter, referred to as a second actuator 311B), and a coupling member 312 (hereinafter, referred to as a second coupling member 312B) that couples an output shaft 311b of the second actuator 311B and the movable lip 21c.

The first actuator 311A is disposed close to the movable lip 21c. A length in an axial direction of the first coupling member 312A that couples the output shaft 311b of the first actuator 311A and the movable lip 21c is L1.

On the other hand, the second actuator 311B is disposed far from the movable lip 21c so as not to interfere with the first actuator 311A. A length in an axial direction of the second coupling member 312B that couples the output shaft 311b of the second actuator 311B and the movable lip 21c is L2 that is longer than L2.

According to modified example 3, it is also possible to exhibit similar effects to those of the reference example 1, such as being able to shorten the time period required for adjustment of the lip gap. Further, according to modified example 3, as compared with the reference example 1 described above, a disposition interval L3 of the coupling members 312 can be narrowed (the disposition interval L3 shown in Fig. 12 < a disposition interval L4 shown in Fig. 3).

### (Modified Example 4)

In the reference example 1 described above, the example of using the T die 20 including the die block 21 including the movable lip 21c and the die block 22 including the fixed lip 22c as the extrusion molding die is described, but the present invention is not limited to this.

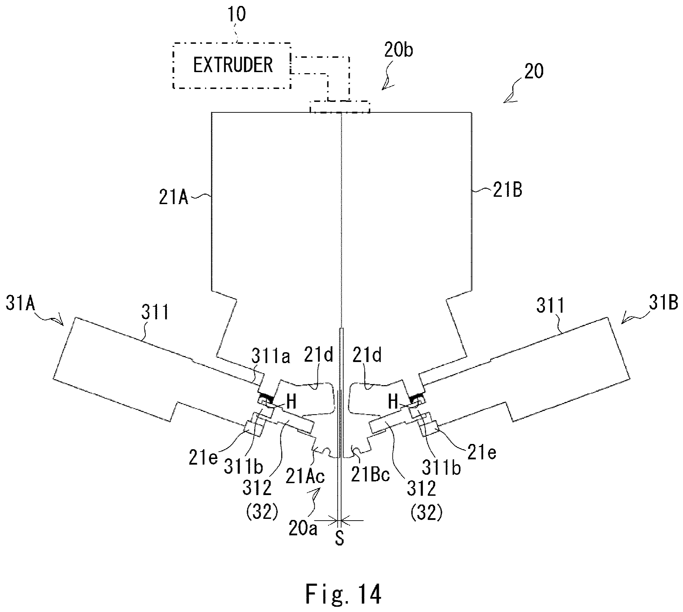

For example, as shown in Fig. 14, a T die 20 including a die block 21A including a movable lip 21Ac, and a die block 21B including a movable lip 21Bc may be used. The movable lip 21Bc is one example of a mating lip of the present invention. Fig. 14 is a cross-sectional view of the T die 20 (modified example 4) including the first die block 21A including the movable lip 21Ac, and the second die block 21B including the movable lip 21Bc.

The first die block 21A includes a plurality of third lip gap adjusting mechanisms 31A that are disposed in a width direction (direction orthogonal to a paper surface in Fig. 14) of the first die block 21A, and adjust a lip gap S at respective disposition spots. Likewise, the second die block 21B includes a plurality of fourth lip gap adjusting mechanisms 31B that are disposed in a width direction (direction orthogonal to the paper surface in Fig. 14) of the second die block 21B, and configured to adjust the lip gap S at respective disposition spots.

According to modified example 4, it is also possible to exhibit similar effects to those of the reference example 1.

Note that in each of the T die 20 of modified example 1 (see Fig. 9), the T die 20 of modified example 2 (see Fig. 10), and the T die 20 of modified example 3 (see Fig. 11 to Fig. 13), the T die 20 including the first die block 21A including the movable lip 21Ac, and the second die block 21B including the movable lip 21Bc may be used similarly to present modified example 4.

### <Embodiment>

Next, an extrusion molding apparatus 1A according to this embodiment will be described.

The extrusion molding apparatus 1A according to this embodiment is different from the extrusion molding apparatus 1 according to the reference example 1 in that the extrusion molding apparatus 1A according to this embodiment includes a T die 20A, a lip gap adjusting mechanism 31C that adjusts a lip gap S between a movable lip 21c and a fixed lip 22c of the T die 20A, the lip gap adjusting mechanism 31C including an actuator 311, a retainer 200 that holds the lip gap adjusting mechanism 31C, heat insulation members (a first heat insulation member 100a and a second heat insulation member 100b), and bearings (bushings 400a and 400b). The other configurations of the extrusion molding apparatus 1A according to this embodiment are similar to those of the extrusion molding apparatus 1 according to the reference example 1. Hereinafter, a difference from the reference example 1 will be mainly described. The same components as those of the reference example 1 will be assigned with the same reference signs, and explanation will be properly omitted.

### <Configuration of T Die>

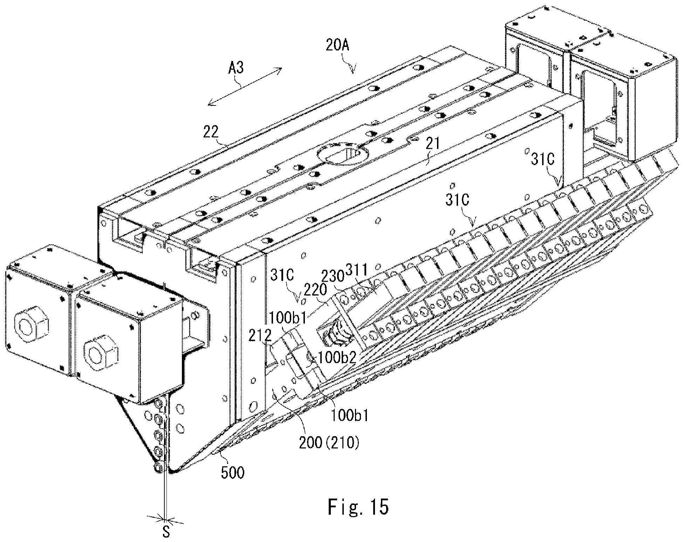

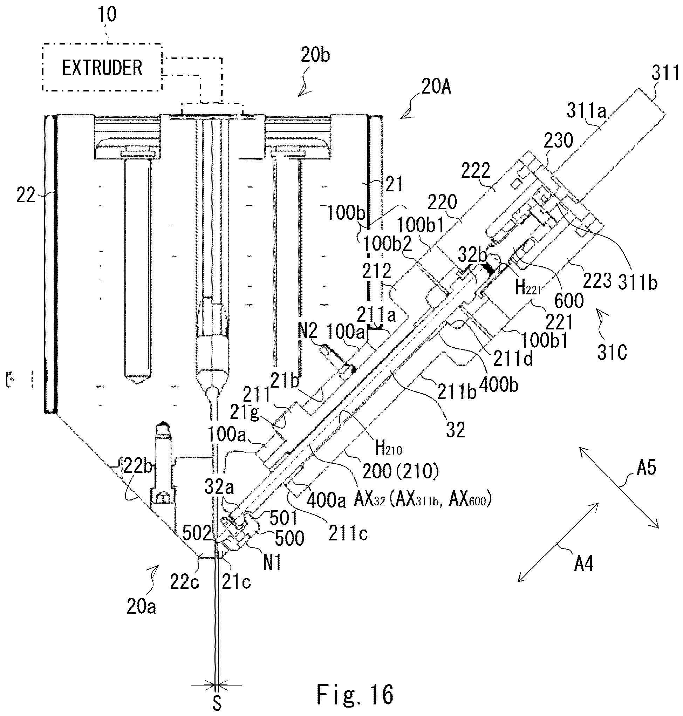

Next, with reference to Figs. 15 and 16, a configuration of the T die 20A will be described.

Fig. 15 is a perspective view of the T die 20A to which the lip gap adjusting mechanism 31C is attached. Fig. 16 is a central cross-sectional view of the T die 20A.

The T die 20A has a configuration similar to that of the T die 20 according to the above reference example 1. That is, the T die 20A includes a pair of die blocks 21 and 22. The die block 21 includes a tip end portion including a taper surface 21b that is inclined toward a tip end (movable lip 21C). Likewise, the other die block 22 includes a tip end portion including a taper surface 22b that is inclined toward a tip end (fixed lip 22c).

### <Configuration of Lip Gap Adjusting Mechanism>

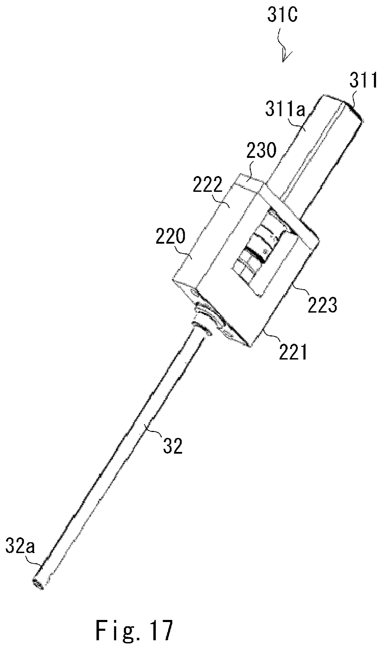

Fig. 17 is a perspective view of the lip gap adjusting mechanism 31C extracted from Fig. 15.

As shown in Fig. 15, a plurality of lip gap adjusting mechanisms 31C are disposed in a width direction (see arrow A3 in Fig. 15) of the T die 20A, and are configured to adjust a lip gap S at respective disposition spots.

The lip gap adjusting mechanism 31C is a mechanism for adjusting the lip gap S between the movable lip 21c and the fixed lip 22c of the T die 20A, and includes, as shown in Figs. 16 and 17, an actuator holding portion 220, an actuator 311, and a rod member 32 (or an adjusting bolt) that couples an output shaft 311b of the actuator 311 to the movable lip 21c.

The actuator holding portion 220 is a metallic member including a base portion 221, and extending portions 222 and 223 extending in a direction perpendicular to the base portion 221 from each side of the base portion 221. An actuator body 311a is held in the actuator holding portion 220 by fixing (e.g., screw fixing) a metallic plate 230 to which the actuator body 311a is fixed (e.g., screw fixing) to extending portions 222 and 223 of the actuator holding portion 220. As shown in Fig. 16, a nut portion 600 is fixed to the output shaft 311b of the actuator 311. A part of the nut portion 600 (female screw portion) is inserted into a through-hole H₂₂₁ formed in the base portion 221 of the actuator holding portion 220.

A base end portion 32b (male screw portion) of the rod member 32 is screwed into the nut portion 600 (female screw portion) inserted into the through-hole H₂₂₁. At this time, a center axis AX_{311b} (rotation axis) of the output shaft 311b of the actuator 311, a center axis AX₆₀₀ (rotation axis) of the nut portion 600, and a center axis AX₃₂ (rotation axis) of the rod member 32 coincide (substantially coincide) with each other. In contrast, the base end portion 32b of the rod member 32 may be a female screw portion and a part of the nut portion 600 may be a male screw portion.

As shown in Fig. 16, the lip gap adjusting mechanism 31C having the aforementioned configuration is held in the retainer 200. Specifically, the lip gap adjusting mechanism 31C is fixed (e.g., fixed by a bolt) to a cross-sectional U-shaped portion 212 of the retainer 200 in a state in which the rod member 32 is inserted into a through-hole H₂₁₀ formed in the retainer 200 (plate-like portion 210) and a second heat insulation member 100b is held between the actuator holding portion 220 and the retainer 200 (cross-sectional U-shaped portion 212). In this manner, in this embodiment, in order to dispose the actuator 311 as far away from the T die 20A (heat source) as possible, a configuration in which the rod member 32 is inserted into the through-hole H₂₁₀ formed in the retainer 200 (plate-like portion 210) is employed.

On the other hand, a tip end portion 32a of the rod member 32 is fixed (rigidly connected) to the movable lip 21c by a cross-sectional U-shaped coupling member 500.

Specifically, first, one protruded portion 501 of the coupling member 500 is inserted into a groove formed in the tip end portion 32a of the rod member 32, and the other protruded portion 502 of the coupling member 500 is inserted into a groove formed in the movable lip 21c.

Next, a screw N1 inserted into the through-hole formed in the coupling member 500 is screwed into the movable lip 21c.

At this time, since a shape of the one protruded portion 501 of the coupling member 500 is a tapered wedge shape, by screwing the screw N1 into the movable lip 21c, the one protruded portion 501 of the wedge shape presses the tip end portion 32a of the rod member 32 to the movable lip 21c. Accordingly, the tip end portion 32a (tip end surface) of the rod member 32 and the movable lip 21c are fixed (rigidly connected) to each other in a close contact state without gaps between both of them.

As described above, the tip end portion 32a of the rod member 32 is fixed (rigidly connected) to the movable lip 21c by the cross-sectional U-shaped coupling member 500. Accordingly, when the rod member 32 pulls the movable lip 21c to the counter-movable lip 21c side (actuator 311 side), the movable lip 21c can be pulled to the counter-movable lip 21c side without occurrence of backlash.

Since the operation example of the lip gap adjusting mechanism 31C having the aforementioned configuration is similar to the operation example of the lip gap adjusting device 30 described in the aforementioned reference example 1 (see Figs. 5 and 6), explanation will be omitted.

### <Configuration of Retainer>

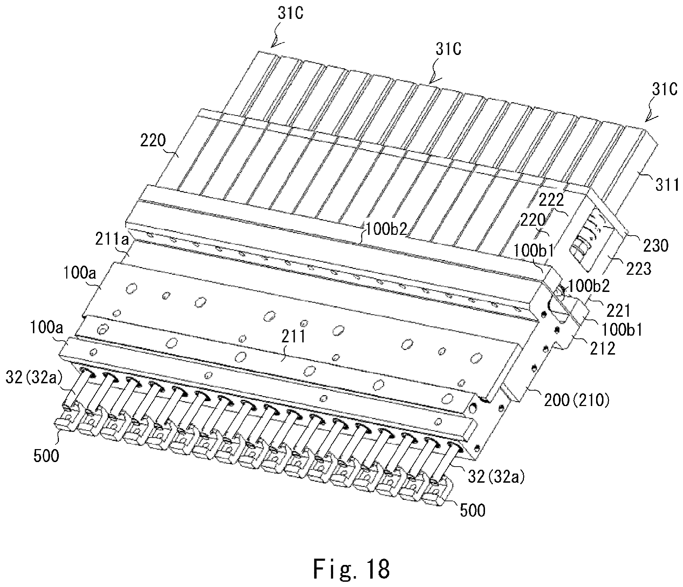

Fig. 18 is a perspective view of the retainer 200.

The retainer 200, which is a metallic member that holds the lip gap adjusting mechanism 31C, includes a plate-like portion 210 and a cross-sectional U-shaped portion 212, as shown in Figs. 16 and 18. The retainer 200 extends in the width direction (see arrow A3 in Fig. 15) of the T die 20A.

As shown in Fig. 16, the plate-like portion 210 includes one principal surface 211a which the T die 20A (taper surface 21b) faces, and the other principal surface 211b on an opposite side thereof. The through-hole H₂₁₀ into which the rod member 32 is inserted is formed in the plate-like portion 210. The through-hole H₂₁₀ penetrates one end surface 211c and the other end surface 211d of the plate-like portion 210. A plurality of through-holes H₂₁₀ are formed in the width direction (see arrow A3 in Fig. 15) of the T die 20A. The bushings 400a and 400b are press-fixed (fit) to the through-hole H₂₁₀. Specifically, the bushings 400a and 400b are press-fixed to the through-hole H₂₁₀ in a state in which the rod member 32 is inserted. The bushings 400a and 400b are examples of bearings of the present disclosure. The bushings 400a and 400b are, for example, heat-resistant bushings (oilless bushings). Note that the inner diameter of the bushings 400a and 400b is smaller than the diameter of the through-hole H₂₁₀.

The retainer 200 having the aforementioned configuration is fixed (e.g., fixed by a bolt) to the T die 20A (taper surface 21b) in a state in which the first heat insulation member 100a is held between the retainer 200 (one principal surface 211a) and the T die 20A (taper surface 21b). At this time, the retainer 200 is fixed to the T die 20A in a state in which a protruded portion 211 of the retainer 200 is inserted into (positioned in) a recessed portion 21g (key groove) formed in the T die 20A (taper surface 21b). The recessed portion 21g (key groove) and the protruded portion 211 extend in the width direction (see arrow A3 in Fig. 15) of the T die 20A.

### <Configuration of First Heat Insulation Member>

As shown in Figs. 16 and 18, the first heat insulation member 100a is a plate-shaped heat insulation member disposed between the die block 21 (taper surface 21b) and the retainer 200 (one principal surface 211a). The first heat insulation member 100a is disposed on each side of the protruded portion 211 of the retainer 200.

The first heat insulation member 100a is disposed between the retainer 200 and the T die 20A in a state in which it is in surface contact (close contact) with the die block 21 (taper surface 21b) and the retainer 200 (one principal surface 211a). The first heat insulation member 100a is fixed to the T die 20A (taper surface 21b) by screwing a screw N2 (see Fig. 16) inserted into the through-hole formed in the heat insulation member 100a into the die block 21 (taper surface 21b). In contrast, the first heat insulation member 100a may be fixed to the retainer 200 (one principal surface 211a).

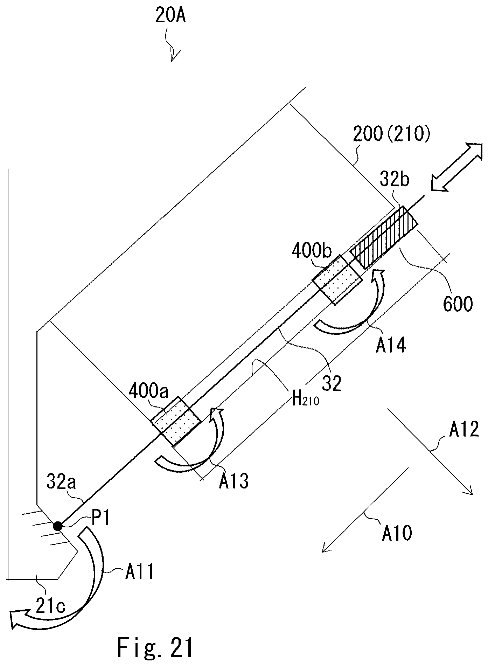

As described above, there is the following advantage to fixing the retainer 200 to the taper surface 21b of the T die 20A. That is, even when the movable lip 21c to which the tip end portion 32a of the rod member 32 is fixed (rigidly connected) is displaced (pushed or pulled) with respect to the fixed lip 22c and a lip bending load (see arrow A11 in Fig. 21) occurs as will be described later, the first heat insulation member 100a disposed between the retainer 200 and the T die 20A is not likely to deform (e.g., thickness deformation), which makes it more likely that a relative positional relation between the T die 20A and the retainer 200 will be maintained.

In order to make the first heat insulation member 100a less likely to deform, a heat insulation member having a higher rigidity may be employed as the first heat insulation member 100a. The first heat insulation member 100a and the second heat insulation member 100b may be heat insulation members of the same type or may be heat insulation members of different types. For example, a heat insulation member having a higher rigidity than the second heat insulation member 100b does may be employed as the first heat insulation member 100a and a heat insulation member having a higher heat insulation performance than the first heat insulation member 100a does may be employed as the second heat insulation member 100b. Further, the thickness of the first heat insulation member 100a and the thickness of the second heat insulation member 100b may be the same or different from each other.

### <Configuration of Second Heat Insulation Member>

As shown in Figs. 16 and 18, the second heat insulation member 100b includes a heat insulation member 100b1 having a prism shape disposed between the retainer 200 (cross-sectional U-shaped portion 212) and the actuator holding portion 220 (base portion 221), and a heat insulation member 100b2 having a thin plate shape.

The heat insulation member 100b1 having a prism shape is disposed between the actuator holding portion 220 (base portion 221) and the heat insulation member 100b2 having a thin plate shape in a state in which the heat insulation member 100b1 is in a surface contact (close contact) with the actuator holding portion 220 (base portion 221) and the heat insulation member 100b2 having a thin plate shape. The heat insulation member 100b1 having a prism shape is disposed on each side of the rod member 32 (see Fig. 16).

On the other hand, the heat insulation member 100b2 having a thin plate shape is disposed between the heat insulation member 100b1 having a prism shape and the retainer 200 (cross-sectional U-shaped portion 212) in a state in which the heat insulation member 100b2 is in a surface contact (close contact) with the heat insulation member 100b1 having a prism shape and the retainer 200 (cross-sectional U-shaped portion 212) (see Fig. 16). A through-hole (not shown) into which the rod member 32 is inserted is formed in the heat insulation member 100b2 having a thin plate shape. A plurality of through-holes are formed in the width direction (see arrow A3 in Fig. 15) of the T die 20A so as to correspond to the rod members 32 (plural).

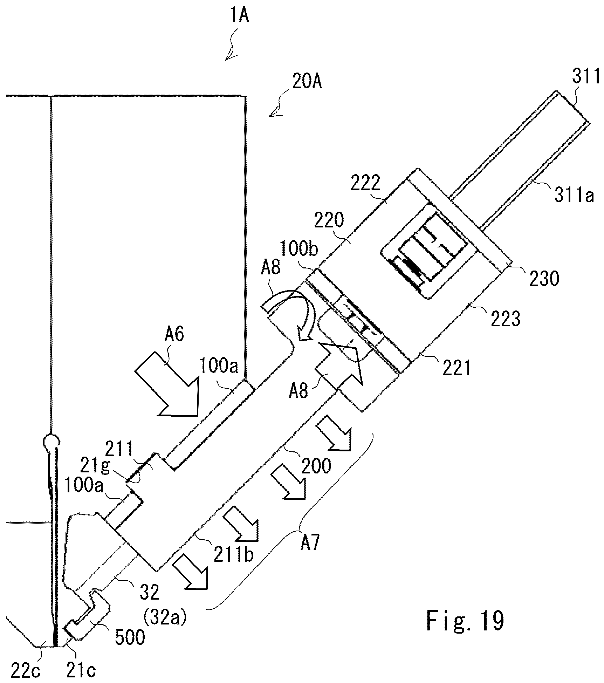

As described above, by disposing the first heat insulation member 100a between the retainer 200 and the T die 20A and disposing the second heat insulation member 100b between the actuator holding portion 220 and the retainer 200, it is possible to restrain the heat (see arrow A6 in Fig. 19) from the T die 20A (heat source) from transferring (that is, heat insulation, see arrow A8 in Fig. 19) to the actuator 311 via the retainer 200, whereby it is possible to restrain the temperature of the actuator 311 from being high. As a result, it is possible to restrain the occurrence of an operation failure of the actuator 311. Fig. 19 is a diagram showing transfer of the heat from the T die 20A (heat source).

Further, by disposing the first heat insulation member 100a between the retainer 200 and the T die 20A and disposing the second heat insulation member 100b between the actuator holding portion 220 and the retainer 200, the retainer 200 (e.g., the other principal surface 211b side) can function as heat dissipation means (heat dissipation surface) for dissipating the heat (see arrows A6 and A7 in Fig. 19) from the T die 20A (heat source), whereby the cooling structure can be simplified.

When a heat insulation member having a high heat insulation performance is used as the first heat insulation member 100a or heat dissipation facilitation means 700 is used as will be described later, the second heat insulation member 100b may be omitted.

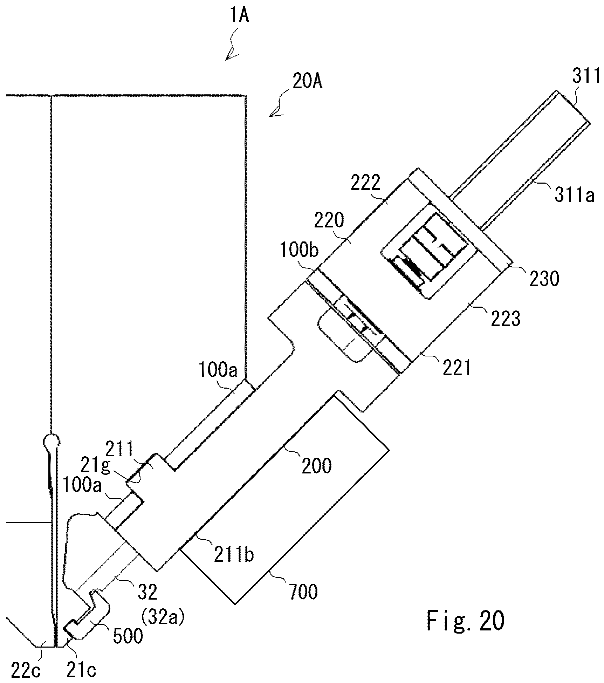

Fig. 20 shows an example of the extrusion molding apparatus 1A to which the heat dissipation facilitation means 700 is applied. As shown in Fig. 20, the heat dissipation facilitation means 170 may be provided.

The heat dissipation facilitation means 700 may have any configuration as long as it is means for promoting heat dissipation of at least a part of the heat transfer path between the T die 20A and the actuator 311. For example, the heat dissipation facilitation means 700 may be a heat dissipation fin provided in the retainer 200 (e.g., the other principal surface 211b side) or may be a cooling apparatus that cools the retainer 200. The cooling apparatus may be attached to the retainer 200 or may be disposed in the vicinity of the retainer 200 (e.g., the other principal surface 211b side). The cooling apparatus may be a cooling apparatus that promotes heat dissipation by blowing air on the retainer 200 (forcibly cools this retainer 200) or a cooling apparatus that naturally cools the retainer 200. Further, the cooling apparatus may be a cooling system using water, a cooling apparatus using air, a cooling apparatus that can be controlled by a control device such as a Peltier element, a fan, or a blower, or another cooling apparatus. Further, in order to promote heat dissipation of the retainer 200, a part or the whole of the retainer 200 (e.g., the other principal surface 211b side) may be made of metal with high thermal conductivity (e.g., copper).

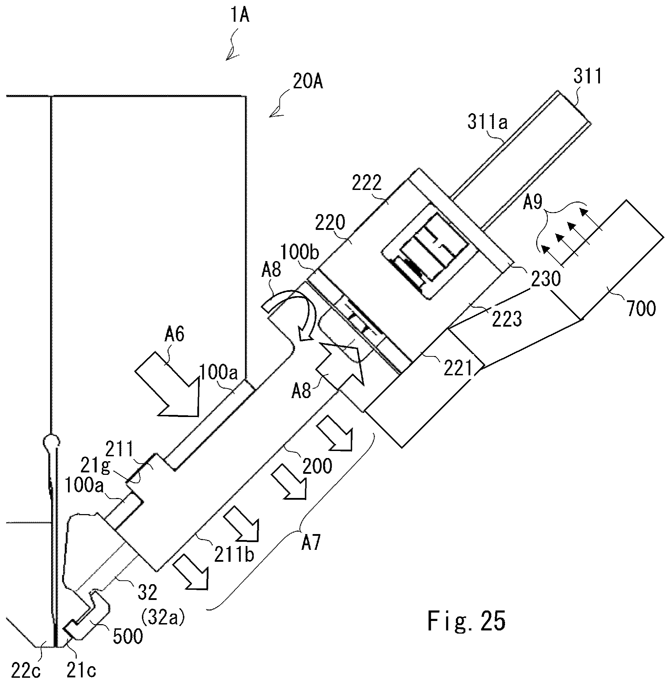

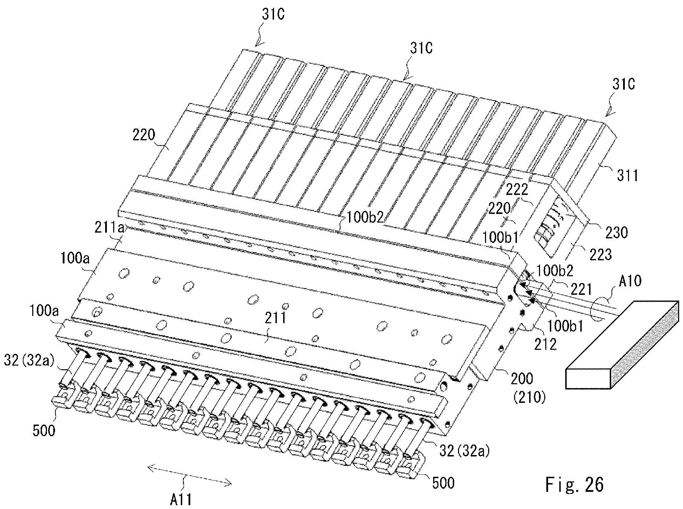

Figs. 25 and 26 are other examples of the heat dissipation facilitation means 700.

As shown in Fig. 25, the heat dissipation facilitation means 700 may be a cooling apparatus that promotes heat dissipation (forcibly cools this actuator 311 (actuator body 311a)) by blowing air on the actuator 311 (actuator body 311a). The arrow shown by the symbol A9 in Fig. 25 indicates the air (forced air) blown from this cooling apparatus to the actuator 311 (actuator body 311a).

Further, as shown in Fig. 26, the heat dissipation facilitation means 700 may be a cooling apparatus that promotes heat dissipation (forcibly cools the retainer 200) by blowing air into a groove portion of the retainer 200 (a space surrounded by the cross-sectional U-shaped portion 212 and the heat insulation member 100b2 having a thin plate shape). The arrow shown by the symbol A10 in Fig. 26 indicates air (forced air) blowing into the groove portion of the retainer 200 (the space surrounded by the cross-sectional U-shaped portion 212 and the heat insulation member 100b2 having a thin plate shape) from the cooling apparatus. Note that the groove portion of the retainer 200 (the space surrounded by the cross-sectional U-shaped portion 212 and the heat insulation member 100b2 having a thin plate shape) extends (penetrates) in the width direction (see arrow A11 in Fig. 26) of the T die 20A.

Next, an operation example of the extrusion molding apparatus 1A having the aforementioned configuration will be simply described.

The output shaft 311b of the actuator 311 (and the nut portion 600) is rotated (forward rotation or reverse rotation) following control by a control unit (e.g., a control unit 80). Accordingly, the screwing amount of the rod member 32 (base end portion 32b) with respect to the nut portion 600 is changed, which causes the rod member 32 to advance and retract in the direction of the axis AX₃₂ (see arrow A4 in Fig. 16). Accordingly, the movable lip 21c to which the tip end portion 32a of the rod member 32 is fixed (rigidly connected) is displaced (pushed or pulled) with respect to the fixed lip 22c, and thus the lip gap S is adjusted.

At this time, the tip end portion 32a of the rod member 32 is fixed (rigidly connected) to the movable lip 21c. Therefore, when, for example, the rod member 32 moves in the direction of the arrow A10 in Fig. 21 and presses the movable lip 21c toward the fixed lip 22c, a lip bending load (see arrow A11 in Fig. 21) occurs and the rod member 32 is about to move in a radial direction (see arrow A12 in Fig. 21) with a bonding portion P1 between the tip end portion 32a of the rod member 32 and the movable lip 21c as a support point in the through-hole H₂₁₀. The same holds true for a case where the rod member 32 moves in a direction opposite to the direction of the arrow A10 in Fig. 21 and the movable lip 21c is pulled. Fig. 21 is a diagram for describing effects of providing the bushings 400a and 400b.

However, the rod member 32 that is about to move in the radial direction (see arrow A12 in Fig. 21) in the through-hole H₂₁₀ abuts on the bushings 400a and 400b, whereby further movement in the radial direction is restricted. Accordingly, it is possible to prevent a bending load from directly acting on the rod member 32, as a result of which it is possible to prevent the base end portion 32b (male screw portion) of the rod member 32 from being pressed against the nut portion 600 (female screw portion). As a result, the output shaft 311b of the actuator 311 can be smoothly rotated. As long as this function is exerted, the number of bushings may be one, or may be two or larger.

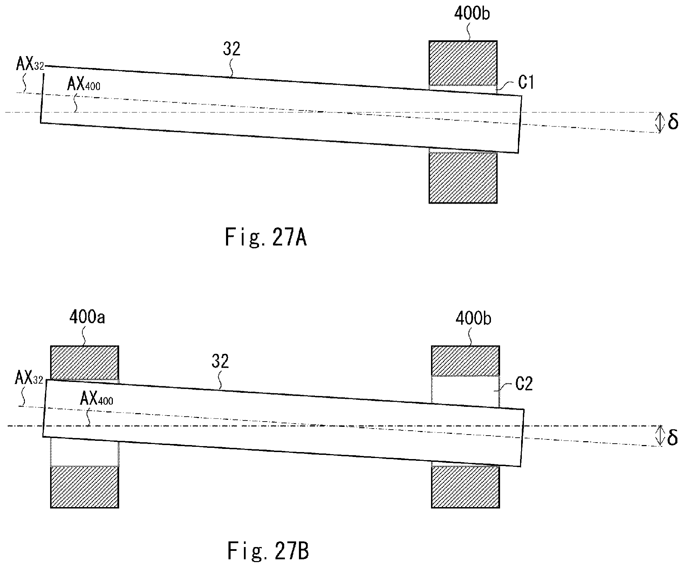

Fig. 27A shows an example of fitting when one bushing 400b is used, and Fig. 27B shows an example of fitting when two bushings 400a and 400b are used.

As shown in Fig. 27A, when one bushing 400b is used, the fitting of the rod member 32 and the bushing 400b is precision sliding fit (e.g., H7g6), and a clearance C1 between the rod member 32 and the bushing 400b is about 30 µ at maximum. On the other hand, as shown in Fig. 27B, when the two bushings 400a and 400b are used, the fitting between the rod member 32 and the bushings 400a and 400b is typically clearance fit, and a clearance C2 between the rod member 32 and the bushings 400a and 400b is about 100 µ at maximum. When two (or a plurality of) bushings 400a and 400b are used, the clearance between the rod member 32 and the bushings 400a and 400b can be widened while maintaining a displacement angle δ (the angle of the center axis AX₃₂ of the rod member 32 with respect to the center axis AX₄₀₀ of the bushing) the same. As stated above, when one bushing is used, precision sliding fit (tolerance) is desirable. On the other hand, when two (or a plurality of) bushings are used, this tolerance can be relaxed to about 0.1 mm.

Further, as long as the aforementioned function can be exerted, the part where the bushings 400a and 400b are press-fixed into the through-hole H₂₁₀ is not limited to the part shown in Fig. 16. Further, the size of the bushings 400a and 400b in the axial direction is not limited to the size shown in Fig. 16.

Note that when the rod member 32 which is about to move in the radial direction (see arrow A12 in Fig. 21) in the through-hole H₂₁₀ abuts on the bushings 400a and 400b, bending load reaction forces (see arrows A13 and A14 in Fig. 21) occur. Since the bushings 400a and 400b function as bearings, even when the rod member 32 which is about to move in the radial direction (see arrow A12 in Fig. 21) in the through-hole H₂₁₀ abuts on the bushings 400a and 400b, this rod member 32 can smoothly move in the direction of the axis AX₃₂.

As described above, the bushings 400a and 400b each function as the guide portion of the present disclosure, that is, a guide portion that can allow the rod member 32 to move in the direction of the axis AX₃₂ (see arrow A4 in Fig. 16) in the through-hole H₂₁₀ while restricting the movement of the rod member 32 in the radial direction (see arrow A5 in Fig. 16) in the through-hole H₂₁₀. The inner diameter of the bushings 400a and 400b into which the rod member 32 is inserted is set to be slightly greater than the diameter of the rod member 32 so that the aforementioned function can be appropriately exerted.

The effects of providing the bushings 400a and 400b will be further described as compared with the comparative example.

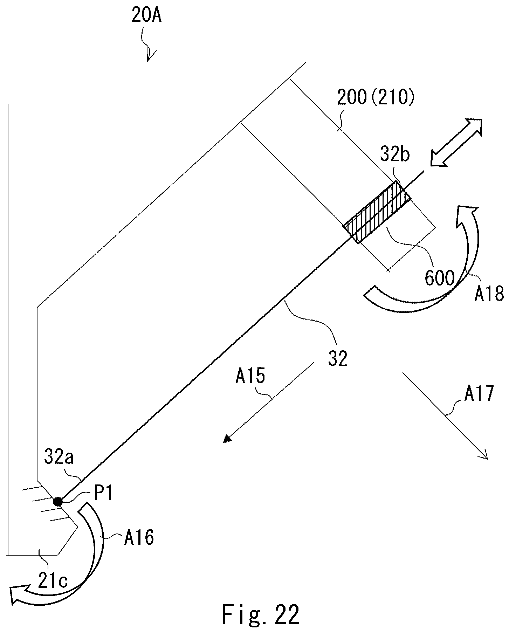

Fig. 22 is a partially enlarged view (simplified view) of an extrusion molding apparatus according to the comparative example.

The configuration of the extrusion molding apparatus according to the comparative example is similar to that of the extrusion molding apparatus 1A shown in Fig. 16 except that the bushings 400a and 400b are omitted in the extrusion molding apparatus according to the comparative example.

Like in the extrusion molding apparatus 1A according to the above embodiment, the tip end portion 32a of the rod member 32 is fixed (rigidly connected) to the movable lip 21c in the extrusion molding apparatus according to the comparative example as well. Therefore, when the movable lip 21c to which the tip end portion 32a of the rod member 32 is fixed (rigidly connected) is displaced (pushed or pulled) with respect to the fixed lip 22c and the lip gap S is adjusted, if, for example, the rod member 32 moves in the direction of the arrow A15 in Fig. 22 and presses the movable lip 21c toward the fixed lip 22c, a lip bending load (see arrow A16 in Fig. 22) occurs and the rod member 32 is about to move in the radial direction (see arrow A17 in Fig. 22) with the bonding portion P1 between the tip end portion 32a of the rod member 32 and the movable lip 21c as a support point in the through-hole H₂₁₀. The same holds true for a case where the rod member 32 moves in a direction opposite to the direction of the arrow A15 in Fig. 22 and the movable lip 21c is pulled.

In the extrusion molding apparatus according to the comparative example, the bushings 400a and 400b are omitted. Therefore, the rod member 32 moves in the radial direction (see arrow A17 in Fig. 22) as this movement is not restricted in the through-hole H₂₁₀, the base end portion 32b of the rod member 32 is pressed against the nut portion 600 and a bending load reaction force (see arrow A18 in Fig. 22) occurs, and friction occurs between the base end portion 32b of the rod member 32 and the nut portion 600. As a result, it becomes difficult for the output shaft 311b of the actuator 311 to rotate smoothly.

On the other hand, according to this embodiment, the rod member 32 that is about to move in the radial direction (see arrow A12 in Fig. 21) with the bonding portion P1 between the tip end portion 32a of the rod member 32 and the movable lip 21c as a support point in the through-hole H₂₁₀ abuts on the bushings 400a and 400b, and therefore further movement in the radial direction is restricted. This prevents a bending load from directly acting on the rod member 32, and as a result, the base end portion 32b (male screw portion) of the rod member 32 is prevented from being pressed against the nut portion 600 (female screw portion). As a result, friction does not occur (hardly occurs) between the base end portion 32b of the rod member 32 and the nut portion 600, and the output shaft 311b of the actuator 311 can be smoothly rotated.

Next, a modified example of the bushings 400a and 400b will be described. While the example in which the bushings 400a and 400b are press-fit into the through-hole H₂₁₀ has been described in the aforementioned embodiment, the present invention is not limited to this. For example, while not shown in the drawings, the bushings 400a and 400b may be fixed to the rod member 32. Specifically, the bushings 400a and 400b may be fixed to the rod member 32 in a state in which the rod member 32 is inserted therein and may be inserted into the through-hole H₂₁₀ along with the rod member 32.

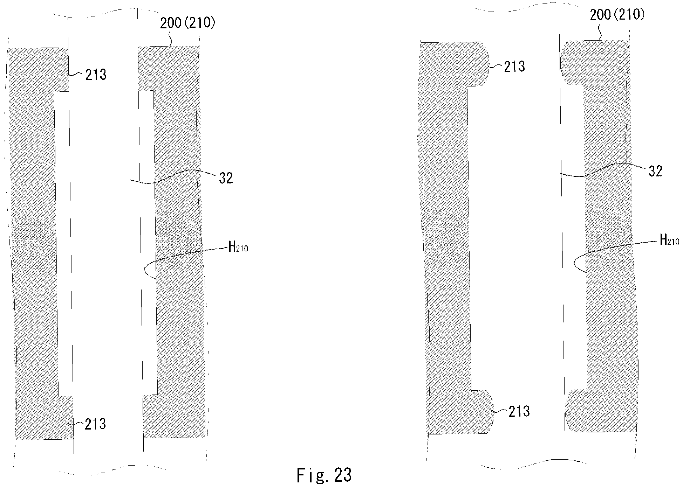

Fig. 23 is a modified example of the bushings 400a and 400b.

As shown in Fig. 23, in place of the bushings 400a and 400b, a small diameter portion 213 provided in a part of the through-hole H₂₁₀ (the plate-like portion 210 of the retainer 200) may be used. At this time, the cross-sectional shape of the small diameter portion 213 may be a linear shape (see the left side in Fig. 23), or may be a curved shape (convex curved shape) so that the friction between the small diameter portion 213 and the rod member 32 is further reduced (see the right side in Fig. 23).

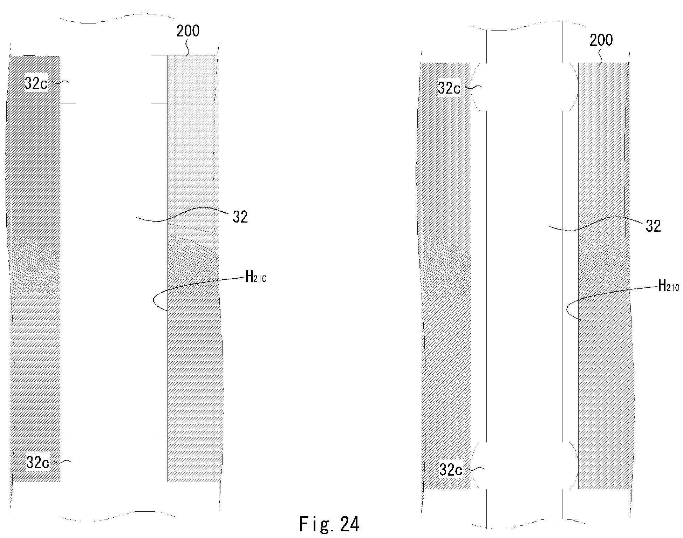

Fig. 24 shows another modified example of the bushings 400a and 400b.

As shown in Fig. 24, in place of the bushings 400a and 400b, a large diameter portion 32c provided in a part of the rod member 32 may be used. At this time, the cross-sectional shape of the large diameter portion 32c may be a linear shape (see the left side in Fig. 24), or may be a curved shape (convex curved shape) so that the friction between the large diameter portion 32c and the through-hole H₂₁₀ (the plate-like portion 210 of the retainer 200) is further reduced (see the right side in Fig. 24).

As described above, according to this embodiment, it is possible to restrain the heat from the T die 20A (heat source) from transferring to the actuator 311 via the retainer 200, whereby it is possible to restrain the temperature of the actuator 311 from becoming high. This is due to the disposition of the first heat insulation member 100a between the retainer 200 and the T die 20A and the disposition of the second heat insulation member 100b between the actuator holding portion 220 and the retainer 200. As a result, it is possible to restrain occurrence of an operation failure of the actuator 311.

Further, according to this embodiment, the retainer 200 can serve as heat dissipation means for dissipating the heat from the T die 20A (heat source), whereby the cooling structure can be simplified. This is also due to the disposition of the first heat insulation member 100a between the retainer 200 and the T die 20A and the disposition of the second heat insulation member 100b between the actuator holding portion 220 and the retainer 200.

Note that the heat insulation members (the first heat insulation member 100a and the second heat insulation member 100b) according to this embodiment are not limited to being applied to the extrusion molding apparatus 1A according to the aforementioned embodiment and can also be applied to other extrusion molding apparatuses, such as the extrusion molding apparatus 1 according to the above-described reference example 1.

Further, according to this embodiment, even in a case where the movable lip 21c to which the rod member 32 (tip end portion 32a) is fixed (rigidly connected) is displaced with respect to the fixed lip 22c, the output shaft 311b of the actuator 311 can be smoothly operated (e.g., rotated).

This is due to the disposition of the bushings 400a and 400b that function as guide portions capable of allowing the rod member 32 to move in the direction of the axis AX₃₂ in the through-hole H₂₁₀ while restricting the movement of the rod member 32 in the radial direction in the through-hole H₂₁₀.

The invention made by the present inventor is specifically described based on the embodiment thus far, but it goes without saying that the present invention is not limited to the embodiment already described, and various changes can be made within the range without departing from the gist of the invention. For example, the modified examples 1-4 described in the above reference example may be applied to the extrusion molding apparatus 1A according to the above embodiment.

This application is based upon and claims the benefit of priority from Japanese patent application No. 2023-032370, filed on March 3, 2023, the disclosure of which is incorporated herein in its entirety by reference.

### Reference Signs List

- 1: EXTRUSION MOLDING APPARATUS
- 10: EXTRUDER
- 11: MOLTEN RESIN OUTLET
- 20, 20A: T DIE (EXTRUSION MOLDING DIE)
- 20a: TIP END PORTION
- 20b: BASE END PORTION
- 21: DIE BLOCK
- 21b: TAPER SURFACE
- 21c: MOVABLE LIP
- 21d: RECESSED PORTION
- 21e: HOLDING PORTION
- 21f: HOLDING PORTION
- 21j: HOLDING PORTION
- 22: DIE BLOCK
- 22b: TAPER SURFACE
- 22c: FIXED LIP
- 23c: SLIT
- 30: LIP GAP ADJUSTING DEVICE
- 31, 31c: LIP GAP ADJUSTING MECHANISM
- 31A: FIRST LIP GAP ADJUSTING MECHANISM
- 31B: SECOND LIP GAP ADJUSTING MECHANISM
- 32: ROD MEMBER
- 32a: TIP END PORTION
- 32b: BASE END PORTION
- 33: HEAT BOLT
- 34: DIFFERENTIAL SCREW
- 35: ROD MEMBER
- 40: COOLING ROLL
- 50: CONVEYOR ROLL GROUP
- 51-58: CONVEYOR ROLL
- 60: WINDER
- 70: THICKNESS SENSOR
- 71: LIP GAP MEASURING UNIT
- 80: CONTROL UNIT
- 92a: MOLTEN RESIN
- 93: FILM
- 100a: FIRST HEAT INSULATION MEMBER
- 100b: SECOND HEAT INSULATION MEMBER
- 200: RETAINER
- 220: ACTUATOR HOLDING PORTION
- 311: ACTUATOR
- 311A: FIRST ACTUATOR
- 311B: SECOND ACTUATOR
- 311a: ACTUATOR BODY
- 311b: OUTPUT SHAFT
- 312: COUPLING MEMBER
- 312A: FIRST COUPLING MEMBER
- 312B: SECOND COUPLING MEMBER
- 313: ACTUATOR
- 313a: ACTUATOR BODY
- 313b: OUTPUT SHAFT
- 341: EXTERNAL SCREW
- 342: INTERNAL SCREW
- 343: ROD
- 400a, 400b: BUSHING (GUIDE PORTION)
- 500: COUPLING MEMBER
- 600: NUT PORTION
- 700: HEAT DISSIPATION FACILITATION MEANS
- S: LIP GAP
- H₂₁₀: THROUGH-HOLE

## Claims

1. An extrusion molding apparatus comprising:
an extrusion molding die;
a lip gap adjusting mechanism configured to adjust a lip gap between a movable lip and a mating lip of the extrusion molding die; and
a retainer configured to be fixed to the extrusion molding die and hold the lip gap adjusting mechanism, wherein
the lip gap adjusting mechanism comprises a rod member which is inserted into a through-hole formed in the retainer and whose tip end portion is fixed to the movable lip, and an actuator configured to adjust the lip gap between the movable lip and the mating lip by advancing or retracting the rod member in an axial direction, and
the extrusion molding apparatus further comprises a guide portion capable of allowing the rod member to move in the axial direction in the through-hole while restricting a movement of the rod member in a radial direction in the through-hole.

2. The extrusion molding apparatus according to claim 1, wherein the guide portion is at least one bearing that is inserted into and fixed in the through-hole in a state in which the rod member is inserted.

3. The extrusion molding apparatus according to claim 1, wherein the guide portion is at least one bearing that is fixed to the rod member in a state in which the rod member is inserted, the bearing being inserted into the through-hole along with the rod member.

4. The extrusion molding apparatus according to claim 2 or 3, wherein the bearing is a bushing.

5. The extrusion molding apparatus according to claim 1, wherein the guide portion is a small diameter portion provided in a part of the through-hole.

6. The extrusion molding apparatus according to claim 1, wherein the guide portion is a large diameter portion provided in a part of the rod member.
